# EUROPÄISCHE PATENTSCHRIFT

(11) **EP 1 347 224 B1**
(45) Veröffentlichungstag und Bekanntmachung des Hinweises auf die Patenterteilung: **25.05.2005**
(21) Anmeldenummer: 03006458.8
(22) Anmeldetag: 21.03.2003
(51) Int. Cl.: F16K 31/06, F16K 27/02

(54) **Elektromagnetventil**
Electromagnetic valve
Soupape électromagnétique

(30) Priorität: 22.03.2002 DE 10213483
(43) Veröffentlichungstag der Anmeldung: 24.09.2003
(73) Patentinhaber: Rausch & Pausch Elektrotechnische Spezialfabrik GmbH, 95100 Selb (DE)
(72) Erfinder: Döhla, Werner, Dipl. Ing.(FH), 95482 Gefrees (DE); Dietel, Rainer, Dipl. Ing.(FH), 95126 Schwarzenbach (DE); Kemnitz, Rocco, Dipl. Ing.(FH), 08606 Bobenneukirchen (DE)
(74) Vertreter: Bock, Gerhard

(56) Entgegenhaltungen:
- WO-A-99/49252
- DE-A- 2 532 134
- FR-A- 2 529 636
- GB-A- 399 510
- GB-A- 994 935
- GB-A- 1 046 552
- SU-A- 1 442 774
- US-A- 3 219 311
- US-A- 4 044 998
- US-A- 4 235 257
- US-A- 5 044 604
- US-A- 6 113 066

## Beschreibung

Die Erfindung betrifft ein Magnetventil zum Freigeben und Absperren von Volumenströmen gemäß der Gattung der Patentansprüche. Mit diesem vorzugsweise für Hydrauliköl bestimmten Magnetventil sollen insbesondere große Volumenströme bis ca. 40 l/min und große Druckdifferenzen bei einer Nennweite NW von ca. 8 mm behandelt werden.

Nach dem Stand der Technik sind folgende Lösungen bekannt:
- Vorgesteuerte Systeme: Bei diesen besteht der Nachteil:, daß eine Mindestdruckdifferenz erforderlich ist und die Funktion in nur einer Richtung gegeben ist.
- Direktgesteuerte Ventile: Diese haben den Nachteil, daß hohe Druckkräfte (ca. 1.000 N) wirken, die entsprechend hohe Federkräfte erfordern. Die Betätigung solcher Ventile ist nur mit sehr großen Elektromagneten mit inakzeptablem Leistungsbedarf realisierbar.
- Bei bekannten druckausgleichenden Sitzventilen weist die Sitz und Gleitdichung einen fast identischem Durchmesser auf, was eine weitgehende Eliminierung von Druckkräften bedingt und den Kraftbedarf auf die Überwindung von Reibungs- und Strömungskräften reduziert. Dadurch können schwächere Federn und kleinere Magneten Verwendung finden. Weiterhin sind metallische Hartdichtungen mit einem kugel- oder kegelförmigem Dichtkolben bekannt. Bei diesen Lösungen wird der Kegelsitz von einem drückenden Anker betätigt. Dabei ist nachteilig, dass zur Erzielung eines leckagefreien Dichtens höchste Anforderungen an die Geometrie und Oberflächengüte der beiden Dichtelemente gestellt werden müssen, die sich im Grenzbereich des serienmässig Herstellbaren und Messbaren bewegen. Dies bedingt sehr hohe Fertigungskosten für die beiden Dichtpartner, einen erheblicher Prüfaufwand und eine hohe Ausschussrate. Weiterhin sind bei der Handhabung und Montage hohe Reinheitsforderungen einzuhalten.

An die Reinheit des Hydraulikmediums sind bei diesen Lösungen ebenfalls hohe Anforderungen zu stellen. Die Dichtwirkung wird schon durch minimale Schmutzpartikel erheblich beeinträchtigt und ist dann nicht reproduzierbar.
- Aus der DE 25 32 134 A1 ist z. B. ein Kippventil zum Freigeben und Absperren von Volumenströmen bekannt, dessen dem Dichtsitz zugewandte Fläche des Dichtungskörpers mit einer zur geometrischen Achse des Magnetventils konzentrischen, konkaven Ausnehmung und diese mit einer Einlage aus elastischem Material versehen ist. Auch wenn dabei der Dichtungskörper eine strömungsgünstige Form aufweist, wie bspw. in der US 5 044 604 A, können doch an den Berühungsstellen von elastischem und metallischem Kolbenmaterial erhebliche, die Ventilfunktion störende oder unmöglich machende Abrasionserscheinungen auftreten.

Vorliegender Erfindung liegt deshalb die Aufgabe zugrunde, ein Magnetventil zum Freigeben und Absperren von Volumenströmen, vorzugsweise für Hydrauliköl sowie insbesondere für große Volumenströme und/oder große Druckdifferenzen anzugeben, welches sich durch ein kleines Bauvolumen und damit verbunden ein geringes Gewicht, eine niedrige elektrische Leistungsaufnahme, ein leckölfreies Absperren und eine druckverlustarmes Durchströmen in beiden Richtungen sowie ein schnelles Öffnen- und Schließenverhalten und eine Unempfindlichkeit gegen Abrasion des elastischen Kolbenmaterials und Verschmutzung des Mediums (Hydrauliköls) auszeichnet. Weiterhin soll das Magnetventil nach vorliegender Erfindung mehrere Millionen Schaltungen ohne Funktionseinschränkung gewährleisten sowie hohen Druckdifferenzen (bis 200 bar) im abgedichteten und geöffneten Zustand standhalten.

Erfindungsgemäß wird diese Aufgabe durch die kennzeichnenden Merkmale des ersten Patentanspruchs gelöst und durch die Merkmale der Unteransprüche weiter verbessert. Das erfindungsgemäße Magnetventil ist besonders geeignet zum Freigeben und Absperren großer Volumenströme bei hohen Druckdifferenzen. Durch die Erfindung wird ein Durchflusskanal im Magnetventil geschaffen, der im geöffneten Zustand des Ventils eine wenig turbulente und damit wenig abrasive Strömung entstehen lässt. Unterstützt wird diese Wirkung durch eine elastische Einlage in der muldenförmigen Ausnehmung des Dichtungskörpers.
Das vorgeschlagene Magnetventil ermöglicht eine kostengünstige prozesssichere Herstellung für eine Anwendung in der Kraftfahrzeugtechnik. Bevorzugt findet es als Sperrventil in hydraulischen Federungssystemen Verwendung.

Die Erfindung soll an Hand der schematischen Zeichnung dreier Ausführungsbeispiele näher erläutert werden. Es zeigen:
- Fig. 1: ein erfindungsgemäßes Magnetventil in einem Längsschnitt (Axialschnitt),
- Fig. 2: einen detaillierteren, in Fig. 1 von einem strichlinierten Kreis umfaßten, vergrößerten Ausschnitt im Bereich des Ventilsitzes bei geschlossenem Ventil,
- Fig. 3: den detaillierteren, in Fig. 1 vom strichlinierten Kreis umfaßten, vergrößerten Ausschnitt im Bereich des Ventilsitzes bei geöffnetem Ventil,
- Fig. 4: einen detaillierten Ausschnitt aus einer zweiten Ausführungsform und
- Fig. 5: einen detaillierten Ausschnitt aus einer dritten Ausführungsform.

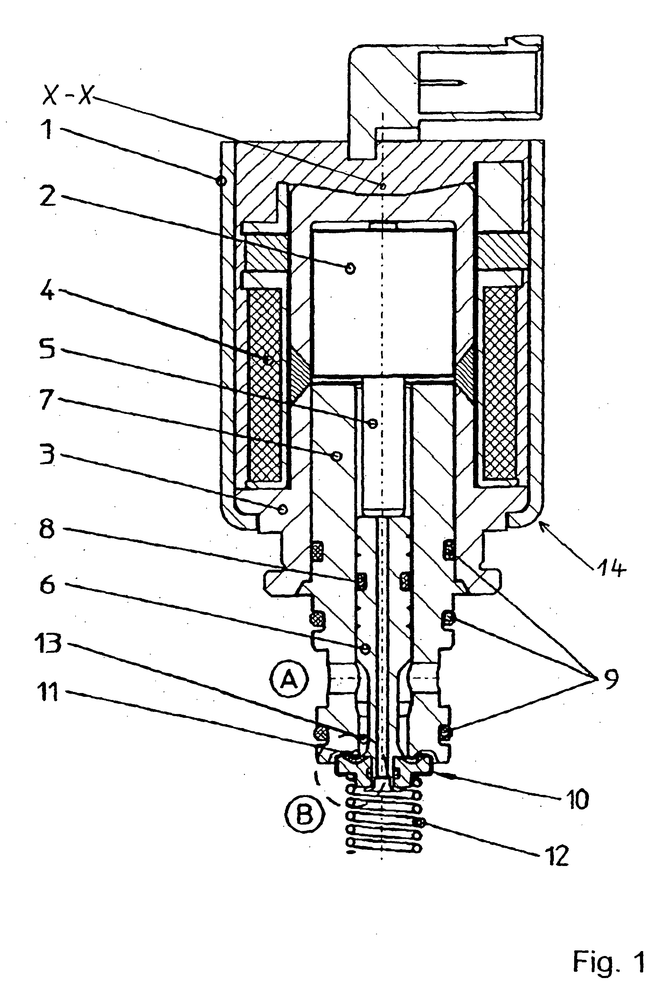

Figur 1 zeigt ein 2-Wege-Magnetventil mit einer Achse X-X in einem Längsschnitt, das aus einem Magnetgehäuse 1 besteht und einen Anker 2 beinhaltet, der von einem Ankerrohr 3 und einer elektrischen Spule 4 in üblicher Weise umfaßt ist. Der Anker 2 wirkt auf einen Betätigungsstift 5 und dieser auf einen Dichtkolben 6 ein. Letztgenannte beide Baugruppen werden von einer Patrone 7 umfaßt und geführt. Der Dichtkolben 6 ist gegen die Patrone 7 vermittels einer Tandem-Gleitdichtung 8 abgedichtet. Die Abdichtung der Patrone 7 gegen das Ankerrohr 3 und übrige, nicht direkt zum Ventil gehörige und deshalb nicht näher dargestellte Baugruppen erfolgt in üblicher Wiese über O-Ringe 9. Ein Dichtungskörper 10 wird vermittels einer Feder 12 gegen einen Dichtsitz 11 gedrückt. Aus Fig. 1 sind weiterhin Anschlüsse A und B für das zu schaltende Medium ersichtlich. Der Dichtkolben 6 weist im Bereich zwischen den Anschlüssen A und B eine sich in Richtung des Anschlusses B erstreckende Verjüngung 13 auf.

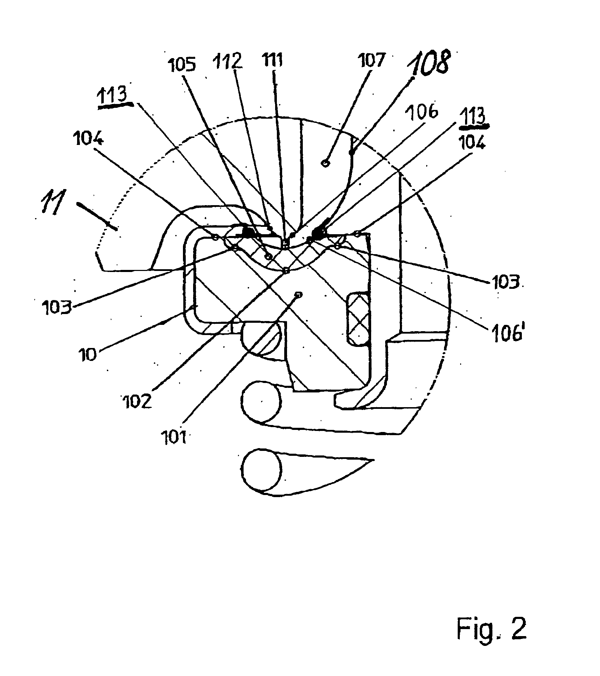

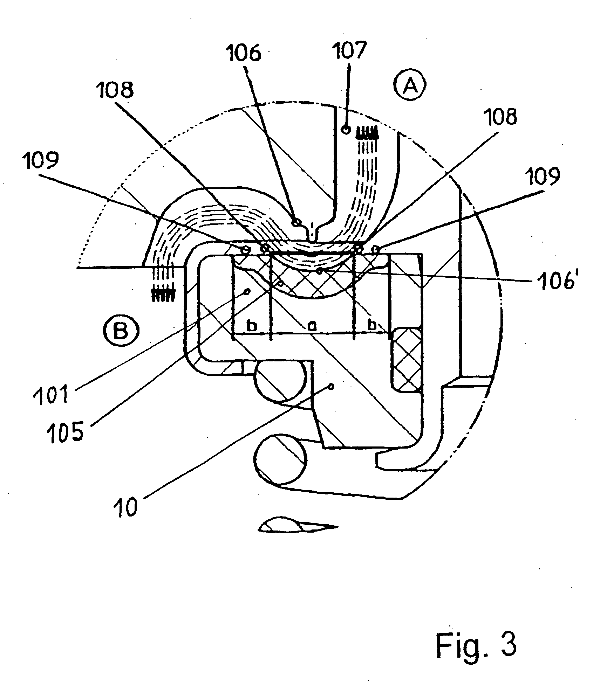

Die beiden Ventilstellungen im geschlossenen und geöffneten Zustand sind in den Figuren 2 und 3 detailliert dargestellt.
Dabei zeigt Figur 2 einen in Fig. 1 von einem strichlinierten Kreis umfaßten, vergrößerten Ausschnitt im Bereich des Ventilsitzes 11 bei geschlossenem Ventil und Figur 3 denselben Ausschnitt bei geöffnetem Ventil. Es ist in diesen Figuren ersichtlich, dass der Ventil- oder Dichtsitz 11 mit verringerter Auflagefläche, bspw. in Form einer sich aus seiner Frontfläche 112 aufwölbenden Nase 111, die auf den Dichtungskörper 10 drückt, versehen ist.
Der Dichtungskörper 10 ist seinerseits an seiner der Nase zugewandten Fläche mit einer kreisförmigen, konkav ausgebildeten Ausnehmung 102 in einem Metallträger 101 versehen. Die an den einander zugewandten Flächen des Ventilsitzes 11 und des Dichtungskörpers 10 vorgesehene Nase 111 bzw. konkave Ausnehmung 102 sind koaxial zur geometrischen Achse X-X des Magnetventils, das vorzugsweise als 2-Wege-Ventil ausgebildet ist, angeordnet.
An die konkave Ausnehmung 102 schließt sich umfangsseitig ein Absatz 103 an. Die konkave Ausnehmung 102 und der Absatz 103 sind mit einem vorzugsweise dünnen elastischen Bauteil 105, bestehend aus einem Elastomer oder einem Kunststoff, wie Polyurethan, derart ausgekleidet, dass dieses in seiner Oberflächengeometrie im Bereich der konkaven Ausnehmung 102 ebenfalls konkav folgt und im Bereich des Absatzes 103 mit einer Oberfläche (Frontfläche) 104 des Metallträgers 101 bündig abschließt. Die Krümmung der genannten konkaven Oberflächengeometrie des elastischen Bauteils 105 ist dabei so festgelegt, dass sie der Krümmung, die im wesentlichen frei vorgebbar ist, einer sich ihr anschließenden Wandung 106 eines Durchflußkanals 107 angepaßt folgt. Letzteres veranschaulicht Fig. 3 bei geöffneter Ventilstellung. Die laterale Ausdehnung der konkaven Oberflächengeometrie des elastischen Bauteils 105 ist dabei in einem ersten Bereich a so groß festgelegt, dass sie sich beidseitig stetig an eine Strömungskanalwandung 108 anschmiegt und im Übergang von einer vorspringenden Ringkante 113 umfasst wird; wohingegen ein äußerer Bereich b des elastischen Bauteils 105, der im Bereich des Absatzes 103 mit der Oberfläche 104 des Metallträgers 101 bündig abschließt, außerhalb des erfaßten Strömungskanals liegt und an diesen gegenüberliegende metallischen Anlagen 109 andrücken, wodurch ein mechanischer Schutz der Anbindungsstellen des elastischen Bauteils 105 an den Dichtungskörper 10 gewährleistet ist.
Bevorzugt wird das elastische Bauteil 105 durch Vulkanisation eines Elastomers auf der Ausnehmung 102 und dem Absatz 103 hergestellt. Die Dicke des elastischen Bauteils sollte weniger als 1 mm betragen und ist in jedem Fall dicker als die Länge der Nase 111, die in diesem Fall wenige Zehntelmillimeter beträgt.

Dadurch ist gewährleistet, dass bei Minimierung des Elastomervolumens die globale Verformbarkeit des Dichtelements 105 ebenfalls minimiert ist. Im Bereich der Auflage- bzw. Eindrückfläche in das elastische Bauteil 105 ist die Nase 111 verrundet ausgebildet.

Zum Ausgleich von Fluchtungsfehlern kann eine pendelnde Dichtung vorgesehen sein. Hierzu kann der Dichtkörper 10 am Dichtkolben 6 mit einem Spiel befestigt sein, so dass ein Ausgleich von Schiefstellungen selbsttätig möglich ist. Der Dichtkörper 10 richtet seine Winkellage nach dem Dichtsatz 11 aus. Damit sind grössere Toleranzen bei Fertigung und Montage der Einzelteile möglich.

Weiterhin ist abweichend vom Ausführungsbeispiel der Figuren 1 bis 3 eine Ausführungsform möglich, bei welcher der Anker 2 das Dichtelement 10 von der Nase 111 wegzieht.

Zur Vereinfachung der Technologie der Herstellung und Justierung besteht die Möglichkeit, einen in Fig. 1 nicht näher beschriebenen, mittig im Dichtkolben 6 und in den Dichtkörper 10 teilweise hineinragenden Stift 5 in den Anker 2 hineinzupressen und damit den Ventilhub sehr genau und bleibend einzustellen.

Auch ist eine Ausführungsform möglich, bei der eine nicht dargestellte Dichtlippe am elastischen Bauteil 105 die Funktion eines O-Ringes 9 übernimmt.

Unter der Voraussetzung gleicher Schaltzeiten zeichnet sich die Erfindung gegenüber Hartdichtungen nach dem Stand der Technik im wesentlichen durch folgende Vorteile aus:
- Das erfindungsgemäße Magnetventil ist deutlich vereinfacht und kostengünstiger herstellbar, da die Patrone 7 und der Dichtsitz 11, nebst Nase 111 durch Feindrehen gefertigt werden können. Der Dichtungskörper 10 ist durch Drehen bzw. Blechumformung herstellbar.
- Durch Schaffung des elastischen Bauteils 105 in einer Vielfachvulkanisationsform sind kein Schleifen, Honen oder ähnliche aufwendige Verfahren erforderlich. Es können bewährte Standardfertigungsverfahren mit geringem Prozessrisiko zur Anwendung gelangen.
- Die Elastizität des Bauelements 105 kann kleine Schmutzpartikel kompensieren; die kritische Partikelgröße, innerhalb bspw. des Hydrauliköls, die zur Leckage führt, kann deutlich größer sein, als bei bekannten Hartdichtungen.
- Weiterhin bewirkt die im Beispiel vorgeschlagene Ausbildung des Dichtkörpers 10 und des elastischen Bauteils 105 eine sanftere Schließbewegung des Ventils, und die Schließgeräusche werden reduziert.

Nach vorliegender Erfindung gefertigte Magnetventile sind bis über 200 bar beidseitig dicht.
Durch die strömungstechnische optimierte Kontur kann bei NW 8 der gleiche Druckabfall eingehalten werden wie bei Hartdichtungen mit etwa NW 10.
Im Gegensatz zur Linienberührung bei Hartdichtungen (Dichtfläche = 0) besitzt eine Weichdichtung eine endliche Dichtfläche in Abhängigkeit vom Dichtdurchmesser und der Breite der Dichtnase 111. Somit entsteht in Abhängigkeit vom hydraulischen Druck eine resultierende Kraft auf den Dichtungskolben 6.
Durch Ausbilden der Dichtnase 111 mit einem Radius im Berührungsbereich zu elastischen Bauteil 105 kann die Berührungsfläche in Abhängigkeit der Druckdifferenz und -richtung infolge der Verformung des elastischen Bauteils 105 am Radius der Dichtnase 111 entlang wandern. Durch das Wandern der Dichtfläche wird die resultierende Kraft auf den Dichtkolben 6 kompensiert und der Kraftbedarf steigt nicht bei wachsender Druckdiffernz.
Die sanfte Umlenkung der Strömung durch die einander zugekehrten wellenförmigen Flächen minimiert die Strömungskräfte auf die elastischen Bauteile sowie die Abrasion.

Durch die Formgebung des elastischen Bauteils in eine Werkzeugform kann die konkave Form frei gestaltet werden und wird nicht durch das Herstellungsverfahren eingeschränkt, wie z.B. Schleifen oder Honen einer Hartdichtung. Durch Simulationen gefundene optimierte Konturen können in der Bauteilgeometrie Gestalt annehmen.

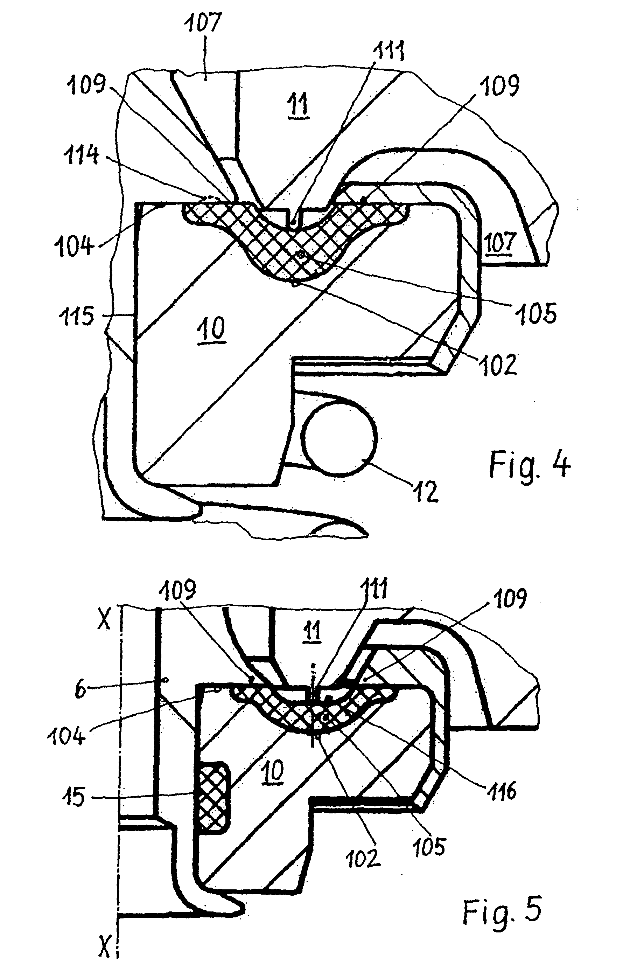

In der Schnittdarstellung der Fig. 4 ist ein Dichtungskörper 10, gegen den sich, wie in Fig. 1 dargestellt, eine Feder 12 abstützt, an einem Dichtkolben 6 befestigt. An seiner einem Dichtsitz 11 zugewandten Fläche 104 ist der Dichtungskörper 10 mit einer konkaven (ringförmigen) Ausnehmung 102 versehen, in der sich eine in ihrer Mitte verdickt gestaltete Elastomereinlage 105 befindet. Diese wird an ihren Seitenrändern durch mit dem Dichtungskörper 10 in Verbindung stehende Anlagen 109 in der konvexen Ausnehmung 102 gehalten. Die Elastomereinlage 105 hat in ihren Bereich b eine Dichtlippe 114, die von der ensprechenden Anlage 109 niedergedrückt wird und eine weitere Dichtung zwischen dem Dichtkolben 6 und dem Dichtungskörper 10 im Bereich 115 erübrigt. Im dargestellten, nahezu geschlossenen Zustand des Magnetventils drückt eine ringförmige, abgerundete Dichtnase 111 des Dichtsitzes 11 gegen die Elastomereinlage 105 und verhindert so einen Medienstrom durch den Durchflusskanal 107. Im übrigen gilt das zu den Figuren 1 bis 3 Gesagte sinngemäß.

In Fig. 5 ist durch die Achse X-X angedeutet, dass es sich bei der gezeigten Schnittdarstellung um eine im Wesentlichen rotationssymmetrische Anordnung handelt. Diese enthält wieder einen Dichtkolben 6, mit dem ein Dichtungskörper 10 verbunden ist. Zwischen beiden ist eine Dichtung 15 vorgesehen, die bei geschlossenem Magnetventil einen Mediendurchtritt verhindert. Der Dichtungskörper 10 hat an seiner einem Dichtsitz 11 benachbarten Fläche 104 eine muldenförmige Ausnehmung 102, die mit einem Elastomer 105 derart ausgefüllt ist, dass sich in der Mitte des Elastomers, dem Dichtsitz 11 zugewandt, eine aus strömungstechnischen Gründen ebene Fläche 116 befindet. Gegen diese drückt im gesperrten Zustand des Magnetventils mittig der Dichtsitz 11 mit einem ringförmigen Vorsprung 111. Anlagen 109 halten die Elastomereinlage 105 in der muldenförmigen Ausnehmung 102. Auch hier gilt das zu den Figuren 1 bis 3 Gesagte sinngemäß.

### Bezugszeichenliste

- 1 -: Magnetgehäuse
- 2 -: Anker
- 3 -: Ankerrohr
- 4 -: Spule
- 5 -: Betätigungsstift
- 6 -: Dichtkolben
- 7 -: Patrone
- 8 -: Tandem-Gleitdichtung
- 9 -: O-Ringe
- 10 -: Dichtungskörper
- 101 -: Metallträger
- 102 -: konkave Ausnehmung
- 103 -: Absatz
- 104 -: Oberfläche des Metallträgers 101
- 105 -: elastisches Bauteil
- 106,106' -: Wandung des Durchflußkanals 107
- 107 -: Durchflußkanal
- 108 -: Anschluß an Strömungskanalwandung
- 109 -: Anlagen
- 11 -: Dichtsitz
- 111 -: Nase
- 112 -: Frontfläche
- 113 -: vorspringende Ringkanten
- 114 -: Dichtlippe
- 115 -: Bereich
- 116 -: Ebene Fläche
- 12 -: Feder
- 13 -: Verjüngung
- 14 -: Magnetventil
- 15 -: Dichtung
- A, B -: Anschlüsse
- a -: innerer Bereich des elastischen Bauteils
- b -: äußerer Bereich des elastischen Bauteils
- X-X -: geometrische Achse des Magnetventils

## Patentansprüche

1. Magnetventil zum Freigeben und Absperren von Volumenströmen, bei dem koaxial zu einer geometrischen Achse (X-X) ein Dichtungskörper (10) und ein Dichtsitz (11) vorgesehen sind, zwischen denen zum Freigeben und Absperren eine Relativbewegung stattfindet, und eine dem Dichtsitz (11) zugewandte Fläche (104) des Dichtungskörpers (10) mit einer zur Achse (X-X) des Magnetventils (14) konzentrischen, konkaven Ausnehmung (102) versehen ist, deren dem Dichtsitz (11) zugewandte Wandung (106) mit einer Einlage aus elastischem Material (105) bedeckt ist, **dadurch gekennzeichnet, dass** an ihren Anschlussstellen zum Dichtungskörper (10) die Oberfläche der Einlage (105) zur Oberfläche des Dichtungskörpers (10) bündig und die Einlage (105) durch vorspringende Ringkanten (113) umfasst ist.

2. Magnetventil gemäß Anspruch 1, dadurch gekennzeichet, dass die Dicke der Einlage (105) mindestens gleich der Höhe eines am Dichtsitz (11) angeordneten ringförmigen Vorsprungs (111) ist.

3. Magnetventil gemäß Anspruch 1, **dadurch gekennzeichnet, dass** die Einlage (105) in ihrem Mittenbereich eine größere Dicke aufweist als an ihren Randbereichen.

4. Magnetventil gemäß Anspruch 1 **dadurch gekennzeichnet, dass** die dem Dichtsitz (11) zugewandte Fläche der Einlage (105) in ihrem Mittenbereich (116) eben gestaltet ist.

5. Magnetventil gemäß Anspruch 2, **dadurch gekennzeichnet, dass** die ringförmige Vorsprünge (111) abgerundete Ringkanten besitzen.

## Claims

1. Solenoid valve for releasing and blocking volume flow rates which is provided with a sealing body (10) and a sealing seat (11) arranged in coaxial position to a geometric axis X-X, whereby a relative movement for releasing and blocking purposes takes place between these two elements, and an area (104) of the sealing body (10) facing the sealing seat (11) has a concentric concave recess (102) to the axis X-X of the solenoid valve (14), whereby the wall (106) of this recess facing the sealing position (11) is covered by a jacket made of elastic material (105), wherein at its connection points to the sealing body (10) the surface of the jacket (105) is flush with the surface of the sealing body (10) and the jacket (105) is surrounded by projecting circular edges (113).

2. Solenoid valve according to claim 1, wherein the thickness of the jacket (105) at least corresponds to the height of the circular projection (111) arranged at the sealing seat (11).

3. Solenoid valve according to claim 1, wherein the jacket (105) is thicker at its central area than at its edges.

4. Solenoid valve according to claim 1, wherein the surface of the jacket (105) facing the sealing seat (11) has an even design at its central area (116).

5. Solenoid valve according to claim 2, wherein the circular projections (111) are provided with rounded circular edges.

## Revendications

1. L'électrovanne destinée à libérer ou bloquer les débits de fluides, sur laquelle sont montés de manière coaxiale par rapport à l'axe géométrique X-X, le corps d'une garniture d'étanchéité (10) et un siège d'étanchéité (11) entre lesquels se produit un mouvement relatif assurant soit l'ouverture et le passage, soit la fermeture et le blocage des débits de fluides, la face (104) du corps de garniture d'étanchéité (10) regardant en direction du siège d'étanchéité (11), et étant dotée d'une cavité concave et concentrique se trouvant en position opposée à l'axe X-X de l'électrovanne (14), dont la paroi (106) située en face du siège d'étanchéité (11) étant recouverte d'un élément en matière élastique (105), est **caractérisée en ce que**, en ses points de contact avec la surface du corps de garniture d'étanchéité (10), la surface de la partie insérée de l'élément (105) est solidaire de la surface du corps de garniture d'étanchéité (10), et retenue par des bords annulaires saillants qui l'entourent (113).

2. L'électrovanne suivant la revendication 1 est **caractérisée en ce que** l'épaisseur de l'élément inséré (105) correspond au moins à la hauteur d'une partie annulaire saillante (111) située sur le siège d'étanchéité (11).

3. L'électrovanne suivant la revendication 1 est **caractérisée en ce que** la partie centrale de l'élément inséré (105) est plus haute que les zones situées à proximité du bord.

4. L'électrovanne suivant la revendication 1 est **caractérisée en ce que** la partie médiane (116) de la surface de l'élément inséré (105) se trouvant en face du siège d'étanchéité (11) adopte une forme plane.

5. L'électrovanne suivant la revendication 2 est **caractérisée en ce que** les bords des parties annulaires saillantes (111) sont arrondis.
